# EUROPEAN PATENT SPECIFICATION

(11) **EP 4 476 403 B1**
(45) Date of publication and mention of the grant of the patent: **19.11.2025**
(21) Application number: 23703661.1
(22) Date of filing: 07.02.2023
(51) Int. Cl.: E02D 13/08, F03D 13/10, F03D 13/40, B63B 35/00, E02D 13/04, E02D 15/08, E02D 27/52

(54) **A VESSEL**
GEFÄSS
NAVIRE

(30) Priority: 11.02.2022 NL 2030893
(43) Date of publication of application: 18.12.2024
(73) Proprietor: IQIP Holding B.V., 3361 EP Sliedrecht (NL)
(72) Inventor: ZUIJDGEEST, Quintus Wilhelmus Petrus Maria, 3361 EP Sliedrecht (NL); VAN TOL, André, 3361 EP Sliedrecht (NL); MULDERIJ, Klaas-Jan, 3361 EP Sliedrecht (NL)
(74) Representative: De Vries & Metman
(86) International application number: PCT/NL2023/050051
(87) International publication number: WO 2023/153922

(56) References cited:
- WO-A1-2018/146163
- WO-A1-2021/245236
- WO-A1-2022/079112

## Description

The present invention relates to a vessel comprising a hull including a circumferential wall, a deck and an upending hinge which is provided with a frame that is mounted to at least one of the deck and the hull at a position along the circumferential wall and a bearing member including a bottom, two legs located at a distance from each other and extending from the bottom and a bearing surface between the legs for bearing a monopile, which bearing member is mounted to the frame through bearing member pivots at the respective legs having a common axis of rotation at a distance from the bottom of the bearing member and extending in a direction along the circumferential wall at the location of the upending hinge, wherein the bearing member has a monopile receiving position, which is a rotational position with respect to the common axis of rotation of the bearing member pivots in which the bottom of the bearing member is located below the common axis of rotation of the bearing member pivots and the bearing surface is facing upwardly, and a monopile upending position, which is a rotational position with respect to the common axis of rotation of the bearing member pivots in which the bearing surface is located outside the circumferential wall and facing away from the circumferential wall at the location of the upending hinge.

Such a vessel is known in the prior art, see in particular document WO 2021/245236. The known vessel is used for installing monopiles in a seabed. The monopiles are transported horizontally by the vessel to an off-shore installation site. At the installation site a monopile to be installed in the seabed is lifted by a lifting carriage and displaced to an upending line of the upending hinge where it is lowered and positioned on the bearing surface thereof. Subsequently, a crane lifts the monopile at a distance from the bearing member pivots such that it is upended by means of the crane, assisted with the upending hinge. In the monopile upending position the bearing surface is located outside the circumferential wall such that the monopile can extend upright outside the circumferential wall of the hull at the location of the upending hinge. After the step of upending the monopile it is moved by the crane to a gripper, where it is placed onto the seabed. Then, a pile driving device is placed on top of the monopile which drives the monopile into the seabed. A disadvantage of the known vessel is that lifting the monopile before positioning it on the bearing surface of the bearing member may lead to an unstable condition.

An object of the invention is to provide a vessel which facilitates the process of positioning a monopile on the bearing surface of the bearing member.

This object is accomplished with the vessel according to the invention, wherein the frame is provided with a lifting mechanism for lowering the bearing member pivots with respect to their positions in the monopile receiving position of the bearing member, and wherein:
- the lifting mechanism comprises a bearing member support (12) which is mounted to the bearing member (19) through the bearing member pivots (17) and which is mounted to one of the deck (4) and the hull through a support pivot (15) having an axis of rotation which is parallel to the common axis of rotation of the bearing member pivots (17), wherein the bearing member support (12) is rotatable about the axis of rotation of the support pivot (15) by means of a driving device (13, 14, 16, 17, 18, 30, 31) or- the lifting mechanism comprises a four-bar linkage, of which the deck (4) forms a first bar, whereas a second bar (12) is mounted to the deck (4) through a second bar pivot (15) having an axis of rotation which is parallel to the common axis of rotation of the bearing member pivots (17), a third bar (13) is mounted to the deck (4) through a third bar pivot (16) having an axis of rotation which is parallel to the axis of rotation of the second bar pivot (15) and a fourth bar is formed by an upper link (14) that is mounted to the second bar (12) through a first upper link pivot (17) having an axis of rotation which is parallel to the axis of rotation of the second bar pivot (15) and to the third bar (13) through a second upper link pivot (18) having an axis of rotation which is parallel to the axis of rotation of the third bar pivot (16), wherein the bearing member (19) is mounted to at least one of the second bar (12) and the upper link (14) through the bearing member pivots (17), wherein the second bar (12) is rotatable about the axis of rotation of the second bar pivot (15) by means of a driving device (13, 14, 16, 17, 18, 30, 31).

When the bearing member pivots are at a lower height level than in the monopile receiving position of the bearing member the monopile may be lifted with respect to the deck by a lifting carriage to only a relatively low height level in order to move the monopile over one of the bearing member pivots so as to position the monopile above the bearing surface at the upending line. This is advantageous in terms of stability of the monopile on the lifting carriage. The lifting carriage may prevent a crane on the vessel from being used to move a monopile from a monopile storage on the deck to the upending line. After the monopile has arrived at the upending line and is positioned above the bearing surface the lifting mechanism of the upending hinge can move the bearing member pivots upwardly such that the monopile can be received between the legs of the bearing member. After the bearing member has achieved its monopile receiving position the monopile may be lowered by the lifting carriage until it rests on the bearing surface.

The common axis of rotation of the bearing member pivots may lie outside the circumferential wall in the monopile receiving position. This provides the opportunity to keep the common axis of rotation of the bearing member at the same location in both the monopile receiving position and the monopile upending position of the bearing member such that the bearing member only rotates between the monopile receiving position and the monopile upending position.

The bearing member be U-shaped.

In a particular embodiment the lifting mechanism comprises a bearing member support which is mounted to the bearing member through the bearing member pivots and which is mounted to one of the deck and the hull through a support pivot having an axis of rotation which is parallel to the axis of rotation of the bearing member pivots, wherein the bearing member support is rotatable about the axis of rotation of the support pivot by means of a driving device. Upon rotating the bearing member support the height level of the common axis of rotation of the bearing member pivots with respect to the deck will vary. The bearing member support may be arranged such that upon rotating it in outward direction from the circumferential wall of the hull at the upending hinge the bearing member moves downwardly next to the circumferential wall such that at least a part thereof can move to a position below the level of the deck.

The bearing member support may be rigid such that a distance between the common axis of rotation of the bearing member pivots and the axis of rotation of the support pivot is fixed.

In an embodiment the lifting mechanism comprises a four-bar linkage, of which the deck forms a first bar, whereas a second bar is mounted to the deck through a second bar pivot having an axis of rotation which is parallel to the axis of rotation of the bearing member pivots, a third bar is mounted to the deck through a third bar pivot having an axis of rotation which is parallel to the axis of rotation of the second bar pivot and a fourth bar is formed by an upper link that is mounted to the second bar through a first upper link pivot having an axis of rotation which is parallel to the axis of rotation of the second bar pivot and to the third bar through a second upper link pivot having an axis of rotation which is parallel to the axis of rotation of the third bar pivot, wherein the bearing member is mounted to at least one of the second bar and the upper link through the bearing member pivots, wherein the second bar is rotatable about the axis of rotation of the second bar pivot by means of a driving device.

The first upper link pivot and the bearing member pivots are adapted such that their axes of rotation coincide. This means that the second bar, the upper link and the bearing member are rotatable with respect to each other about a single axis of rotation.

In an embodiment the third bar is extendable by an actuator such that the distance between the axes of rotation of the third bar pivot and the second upper link pivot is adjustable and the lifting mechanism is provided with an arm which is mounted to at least one of the upper link and the third bar through a first arm pivot, on the one hand, and to the deck through a second arm pivot, on the other hand, which first and second arm pivots have axes of rotation which are parallel to each other and to the axis of rotation of the third bar pivot, wherein the axis of rotation of the third bar pivot lies between the axes of rotation of the second bar pivot and the second arm pivot, wherein the driving device comprises the third bar including the actuator, the upper link, the third bar pivot, the first upper link pivot, the bearing member pivots, the first arm pivot, the second upper link pivot, the arm and the second arm pivot.

The actuator may be a linear actuator such as a hydraulic cylinder. When the actuator varies the distance between the axes of rotation of the third bar pivot and the second upper link pivot, the arm will be rotated and consequently the upper link will rotate the second bar. This provides the opportunity to configure the frame such that when the actuator reduces the distance between the axes of rotation of the third bar pivot and the second upper link pivot, the arm as well as the third bar as well as the second bar rotate in a direction away from the circumferential wall at the location of the upending hinge. In this case the upending hinge can be changed to a folded condition in which the bearing member pivots and the second upper link pivot lie at a lower level than when the bearing member is in the monopile receiving position.

The first arm pivot and the second upper link pivot may be adapted such that their axes of rotation coincide. This means that the third bar, the upper link and the arm are rotatable with respect to each other about a single axis of rotation.

In a preferred embodiment the arm is an articulated arm, comprising two arm sections which are mounted to each other through an intermediate pivot having an axis of rotation which is parallel to the axes of rotation of the first and second arm pivots, wherein the driving device is a first driving device and the frame is further provided with a second driving device for rotating the arm sections with respect to each other. This embodiment provides the opportunity to configure the frame such that when the arm sections are rotated with respect to each other the arm will pull the third bar and the second bar in a direction which is directed from outside the circumferential wall towards the circumferential wall at the location of the upending hinge. Consequently, the bearing member also moves in a direction which is directed from outside the circumferential wall towards the circumferential wall at the location of the upending hinge. This is an advantageous movement after the bearing member has arrived in the monopile upending position, since the bearing surface is retracted from the monopile in the upended orientation which simplifies further handling of the monopile without collisions with the bearing member, i.e. moving it to the gripper. The frame may be configured such that in this condition of the upending hinge, which may be called a retracted condition, a large part of the bearing member is located above the deck within the circumferential wall of the hull. A further advantage of retracting the upending hinge towards the hull is that the crane doesn't need to reach relatively far to move the monopile to the gripper, which minimizes the risk of overloading the crane and allows to handle relatively heavy piles.

In an embodiment the second bar of the four-bar linkage is formed by the bearing member support, the second bar pivot is formed by the support pivot, and the first upper link pivot and the bearing member pivots are adapted such that their axes of rotation coincide.

In a particular embodiment the vessel is provided with a lifting carriage for lifting a horizontally oriented monopile, wherein the lifting carriage comprises a chassis which is drivable in a direction of movement on the deck, an arc-shaped cradle which extends between a first edge and a second edge thereof and which is mounted to the chassis, wherein the cradle is provided with a supporting surface for supporting a horizontally oriented monopile, which supporting surface is configured to lie on an imaginary cylinder having a substantially circular cross-section and a longitudinal centreline extending transversely to the direction of movement in case of supporting a monopile, wherein the cradle is liftable with respect to the chassis and rotatable with respect to the chassis about an axis of rotation which substantially coincides with the centreline between a monopile supporting position and a monopile approaching position, wherein the first edge lies at a lower height level in case of the monopile approaching position than in case of the monopile supporting position, and wherein the second edge lies at a higher height level in case of the monopile approaching position than in case of the monopile supporting position.

This means that when the cradle is in the monopile approaching position it can be moved to a monopile which is stored on the deck and when the supporting surface is at or close to the monopile the cradle can be rotated in circumferential direction about the monopile to the monopile supporting position. Subsequently, the cradle can be lifted with respect to the chassis and transported towards the upending hinge. An advantage of the rotatable cradle is that due to the relatively low first edge in its monopile approaching position it can catch monopiles which are stored at a relatively low height on the deck, whereas storage at relatively low height is preferred for stability of the vessel.

The first edge and the second edge may lie at substantially the same height level in case of the monopile supporting position. In other words, the cradle may be symmetrical with respect to a vertical plane in which the axis of rotation lies.

The angular distance between the first edge and the second edge is preferably smaller than 180° in order to facilitate positioning the cradle about the monopile.

In an embodiment the cradle comprises a cradle frame to which discrete support elements are mounted next to each other in angular direction about the axis of rotation, together providing the supporting surface, wherein the support elements are movable with respect to the cradle frame such that when the support elements engage a monopile to be lifted they will automatically take positions and orientations which fit to the circumference of the monopile.

At least two support elements may be mounted to a rocker which in turn is mounted to the cradle frame and rotatable with respect to the cradle frame about an axis which is parallel to the axis of rotation in order to force the support elements to take positions and orientations which fit to the circumference of the monopile.

It is noted that the lifting carriage including the rotatable cradle is not necessarily in combination with the upending hinge. In other words, the invention is also related to the following items:
Item 1: A lifting carriage for lifting a horizontally oriented monopile, comprising a chassis which is drivable in a direction of movement, an arc shaped cradle which extends between a first edge and a second edge thereof and which is mounted to the chassis, wherein the cradle is provided with a supporting surface for supporting a horizontally oriented monopile, which supporting surface is configured to lie on an imaginary cylinder having a substantially circular cross-section and a longitudinal centreline extending transversely to the direction of movement in case of supporting a monopile, wherein the cradle is liftable with respect to the chassis and rotatable with respect to the chassis about an axis of rotation which substantially coincides with the centreline between a monopile supporting position and a monopile approaching position, wherein the first edge lies at a lower height level in case of the monopile approaching position than in case of the monopile supporting position, and wherein the second edge lies at a higher height level in case of the monopile approaching position than in case of the monopile supporting position.
Item 2: A lifting carriage according to item 1, wherein the first and the second edge lie at substantially the same height level in case of the monopile supporting position
Item 3: A lifting carriage according to item 1 or 2, wherein the angular distance between the first edge and the second edge is smaller than 180°.
Item 4: A lifting carriage according to any one of the items 1-3, wherein the cradle comprises a cradle frame to which discrete support elements are mounted next to each other in angular direction about the axis of rotation, together providing the supporting surface, wherein the support elements are movable with respect to the cradle frame such that when the support elements engage a monopile to be lifted they will automatically take positions and orientations which fit to the circumference of the monopile.
Item 5: A lifting carriage according to item 4, wherein at least two support elements are mounted to a rocker which in turn is mounted to the cradle frame and rotatable with respect to the cradle frame about an axis which is parallel to the axis of rotation.
Item 6: A lifting carriage according to any one of the items 1-5, wherein the cradle is liftable with respect to the chassis by a plurality of actuators, wherein at least one of the actuators is rotatably mounted to the chassis at a side of the cradle where its first edge is located and extends in vertical direction in the monopile supporting position, wherein the actuator is rotatable with respect to the chassis in the monopile approaching position. Since the actuator may obstruct the cradle from approaching a monopile in its monopile approaching position, the actuator may be rotate away from the vertical orientation, for example to a horizontal orientation.

From the above, it will be clear that lowering the bearing member pivots and rotating the cradle about the monopile to the monopile supporting position, a monopile will remain close to the deck and does not need to be elevated too high to overcome obstacles. The relatively low position of the monopile keeps loads relatively controllable.

The invention will hereafter be elucidated with reference to the schematic drawings showing embodiments of the invention by way of example.
Fig. 1 is a perspective view of an embodiment of a vessel according to the invention.
Figs. 2 and 3 are similar views as Fig. 1, showing different conditions of the vessel.
Fig. 4 is an enlarged view of a part of the vessel as shown in Fig. 1, showing a part of an upending hinge in a monopile receiving condition as depicted in Fig. 1.
Fig. 5 is a similar view as Fig. 4, but showing the upending hinge in a monopile upending condition as depicted in Fig. 3.
Fig. 6 is a similar view as Fig. 4, but showing the upending hinge in a folded condition.
Fig. 7 is a similar view as Fig. 5, but showing the upending hinge in a retracted condition.
Fig. 8 is a perspective view of an embodiment of a lifting carriage according to the invention.
Figs. 9-11 are side views of the lifting carriage as shown in Fig. 8, illustrating successive steps of operating the lifting carriage.
Fig. 12 is a similar view as Fig. 8 on a larger scale, illustrating a condition as shown in Fig. 11.

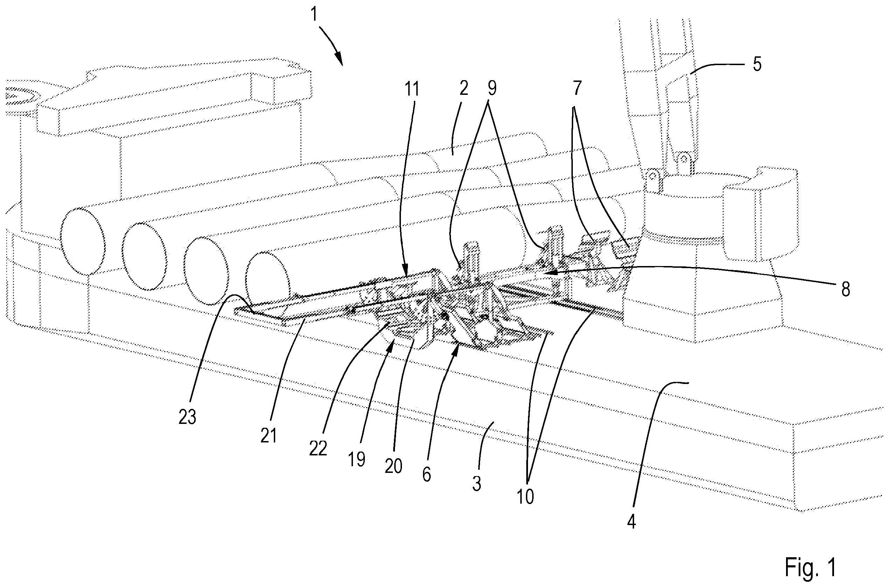

Fig. 1 shows a floating vessel 1 for installing a monopile 2 in a seabed. The vessel 1 has a hull including a circumferential wall 3 and an upper deck 4. A crane 5 for lifting a monopile 2 is mounted on the upper deck 4. The vessel 1 is also provided with a gripper (not shown) for guiding a monopile 2 in its longitudinal direction during driving the monopile 2 into the seabed.

Referring to Fig. 1, under operating conditions, the monopiles 2 are transported horizontally by the vessel 1 from a production facility to an off-shore installation site. At the installation site each of the monopiles 2 is upended by means of the crane 5, assisted with an upending hinge 6.

Figs. 1-3 illustrate the process of upending a monopile 2. In a first step the monopile 2 is lifted from two fixed monopile cradles 7 by a lifting carriage 8. The fixed monopile cradles 7 are attached to the upper deck 4 at a distance from each other, in this case at opposite locations of the circumferential wall 3 of the hull, i.e. at port and starboard. The lifting carriage 8 is provided with monopile cradles 9 in order to safely support and transport the monopiles 2 to an upending line which extends in transverse direction of the vessel 1 at the upending hinge 6. The lifting carriage 8 is drivable along rails 10 on the upper deck 4. The fixed monopile cradles 7 and the monopile cradles 9 of the lifting carriage 8 have discrete support elements which form an arc, but alternative shapes are conceivable.

Before the lifting carriage 8 including the monopile 2 arrives at the upending line the upending hinge 6 is brought into a folded condition, which will be explained hereinafter. After the lifting carriage 8 including the monopile 2 has arrived at the upending line the upending hinge 6 is changed from the folded condition to a monopile receiving condition and the monopile 2 is lowered such that it rests on the upending hinge 6 and a fixed monopile cradle 7 at the upending line. Subsequently, the crane 5 lifts the monopile 2 at a distance from the upending hinge 6 such that it is upended by means of the crane 5, assisted with the upending hinge 6. After the monopile 2 suspends vertically from a cable of the crane 5 it is moved to the gripper by the crane 5, where the monopile 2 is placed onto the seabed. After that the cable is separated from the monopile 2 and a pile driving device (not shown) is placed on top of the monopile 2 by the crane 5 in order to drive the monopile 2 into the seabed.

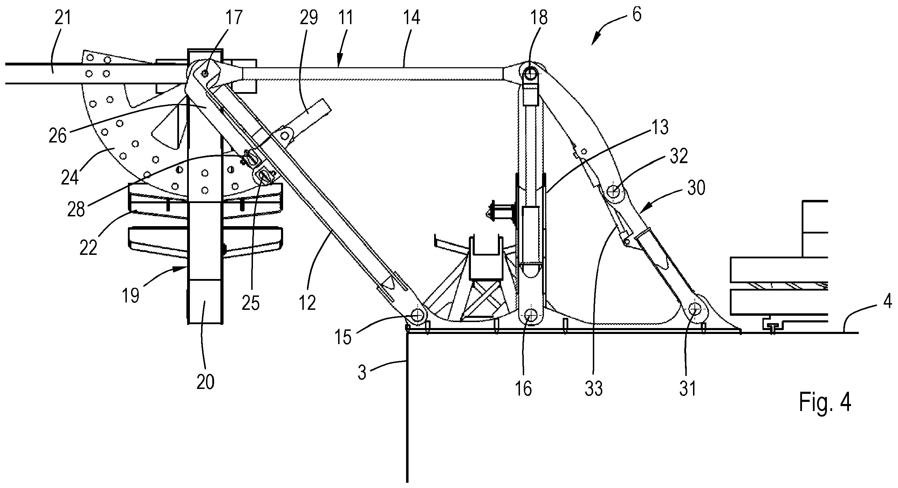

Fig. 4 shows the upending hinge 6 in more detail. It comprises a frame 11 which is mounted to the deck 4 at a position along the circumferential wall 3 of the hull, in this case at port. The frame 11 comprises two identical four-bar linkages which extend parallel to each other within respective vertical planes. A first bar of each of the four-bar linkages is formed by the upper deck 4, a second bar thereof is formed by a support 12, a third bar thereof is formed by an extendable rod 13 and a fourth bar thereof is formed by an upper link 14. The support 12 is mounted to the upper deck 4 through a support pivot 15 which has an axis of rotation which is parallel to the circumferential wall 3 of the hull at port. The extendable rod 13 is mounted to the upper deck 4 through a third bar pivot 16 which has an axis of rotation which is parallel to the axis of rotation of the support pivot 15. The upper link 14 is mounted to the support 12 through a first upper link pivot 17 which has an axis of rotation which is parallel to the axis of rotation of the support pivot 15 and to the extendable rod 13 through a second upper link pivot 18 which has an axis of rotation that is parallel to the axes of rotation of the first upper link pivot 17 and the third bar pivot 16. The extendable rod 13 is provided with a hydraulic cylinder for varying the distance between the axis of rotation of the third bar pivot 16 and the second upper link pivot 18.

The upending hinge 6 is further provided with a bearing member 19 which is mounted to the four-bar linkages through bearing member pivots which have a common axis of rotation that coincides with a common axis of rotation of the first link pivots 17 of the respective four-bar linkages. The bearing member 19 comprises a U-shaped body 20 extending in a first plane and a supporting bracket 21 which extends in a second plane that extends perpendicularly to the first plane. In this case the first and second planes intersect each other along the common axis of rotation of the first link pivots 17, but this may be different in an alternative embodiment. The U-shaped body 20 has a bottom and two parallel legs which are pivotally mounted to the supports 12 and the upper links 14 such that the bottom is located eccentrically with respect to the common axis of rotation of the first link pivots 17. Hence, the supports 12, the bearing member 19 and the upper links 14 are rotatable with respect to each other about the common axis of rotation of the first link pivots 17.

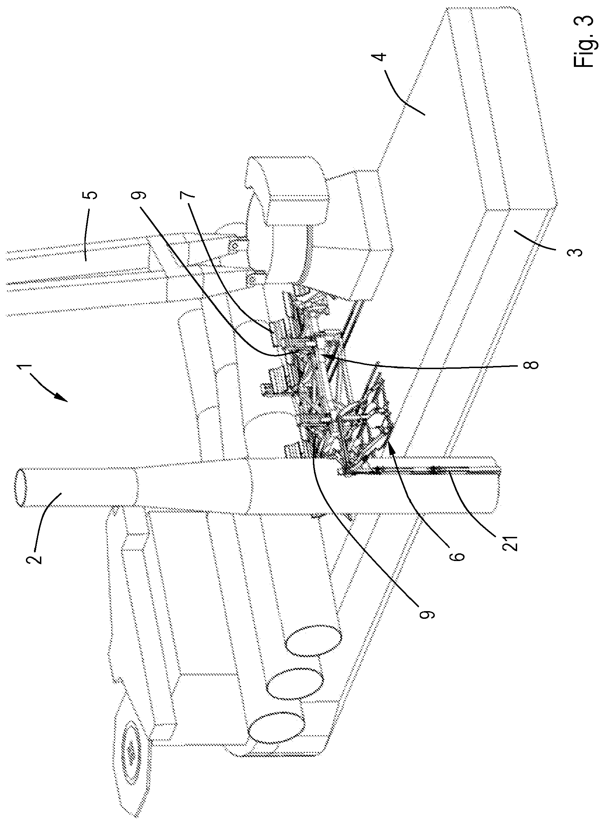

The U-shaped body 20 is provided with discrete bearing elements that together form an arc-shaped bearing surface 22 for bearing a monopile 2 in radial direction thereof, i.e. when the monopile 2 is in the horizontal position. The bearing elements may have the same shape and dimensions as the fixed cradles 7 at starboard. The supporting bracket 21 is provided with a support bar 23 for bearing a monopile 2 in axial direction thereof, i.e. when the monopile 2 is in the vertical position. The latter situation is shown in Fig. 3. The supporting bracket 21 is adjustable such that the distance between the support bar 23 and the bearing member pivots, i.e. the first link pivots 17 in this case, can be varied. This provides the opportunity to bring the support bar 23 into contact with an axial end of a monopile 2 when it is still in a horizontal position on the upending hinge 6 such that it does not slide downwardly along the supporting bracket 21 during the process of upending.

To each of the legs of the U-shaped body 20 of the bearing member 19 an annular plate section 24 is attached. The annular plate sections 24 have through-holes which are located at angular distance from each other about the common axis of rotation of the bearing member pivots. Each of the supports 12 is provided with a first releasable coupling 25 including an extendable pin which can selectively be inserted into one of the through-holes so as to mechanically couple the support 12 and the corresponding annular plate section 24.

The bearing member 19 can be rotated with respect to the supports 12 by means of adjusting rods 26 which are rotatably mounted to the respective supports 12 through rod pivots 27 which have a common axis of rotation that coincides with the common axis of rotation of the first link pivots 17. Each of the adjusting rods 26 is provided with a second releasable coupling 28 including an extendable pin which can be selectively inserted into one of the through-holes of the corresponding annular plate section 24 so as to mechanically couple the adjusting rods 26 and the corresponding annular plate sections 24 to each other. The adjusting rods 26 are rotatable with respect to the respective supports 12 by means of respective hydraulic cylinders 29 which are pivotally mounted to the respective supports 12 and adjusting rods 26. When the pins of the first couplings 25 are retracted and the pins of the second couplings 28 are inserted in one of the through-holes of the respective annular plate sections 24 the bearing member 19 will be rotated with respect to the frame 11 upon operating the hydraulic cylinders 29.

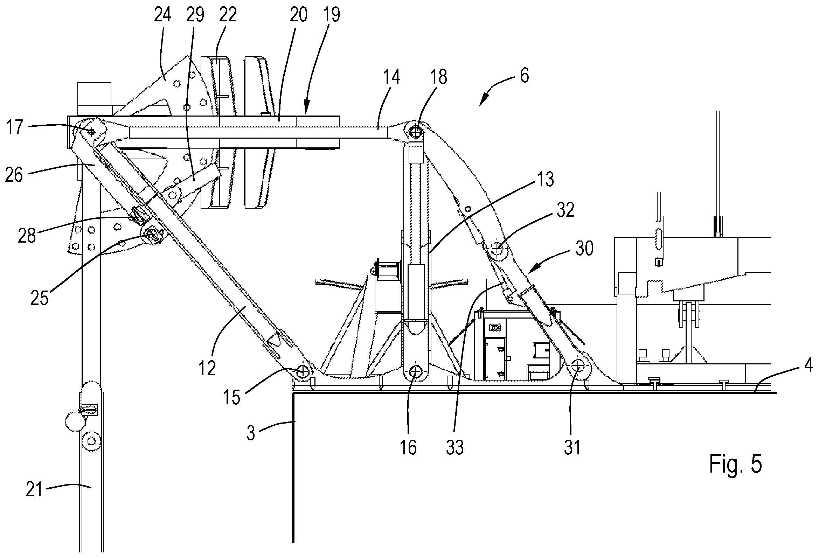

The frame 11 is further provided with parallel articulated arms 30, which are pivotally coupled to the respective four-bar linkages. Upper ends of the articulated arms 30 are mounted to the respective extendable rods 13 and the respective upper links 14 through pivots which have a common axis of rotation which coincides with the common axis of rotation of the second upper link pivots 18. Lower ends of the articulated arms 30 are mounted to the deck 4 through respective arm pivots 31 which have a common axis of rotation that is parallel to the common axis of rotation of the third bar pivots 16. Fig. 5 shows that the common axis of rotation of the third bar pivots 16 lies between the common axes of rotation of the support pivots 15 and the arm pivots 31.

Each of the articulated arms 30 has an intermediate pivot 32 which has an axis of rotation that is parallel to and lies in between the common axes of rotation of the second upper link pivot 18 and the arm pivot 31. Each of the intermediate pivots 32 divides the corresponding articulated arm 30 into two arm sections. The articulated arms 30 can be folded about the common axis of rotation of the intermediate pivots 32 by respective hydraulic cylinders 33. The hydraulic cylinders 33 are mounted to the corresponding arm sections such that when the hydraulic cylinders 33 are in extended conditions the articulated arms 30 extend substantially linearly and when they are in retracted conditions the articulated arms 30 are folded outwardly as seen from the common axis of rotation of the third bar pivot 16.

The hydraulic cylinders which cooperate with the extendable rods 13 form part of a first driving device of the upending hinge 6 and the hydraulic cylinders 33 which cooperate with the articulated arms 30 form part of a second driving device of the upending hinge 6.

Fig. 4 shows the upending hinge 6 in a monopile receiving condition in which the bearing member 19 is in a monopile receiving position. This means that the bottom of the U-shaped body 20 of the bearing member 19 is located below the common axis of rotation of the first link pivots 17 and the bearing surface 22 is facing upwardly, whereas the supporting bracket 21 extends horizontally. In this position a monopile 2 can be placed onto the bearing surface 22 between the legs of the U-shaped body 20 and the fixed monopile cradle 7 located at the upending line at starboard of the vessel 1. In that case the monopile 2 extends between the parallel four-bar linkages and the parallel articulated arms 30. It is noted that in the monopile receiving condition as shown in Fig. 4 the dimensions of the frame 11 are such that the upper links 14 extend parallel to the upper deck 4, the extendable bars 13 extend perpendicular to the upper deck 4 and the supports 12 span a plane which extends inclined with respect to the deck 4 since the common axis of rotation of the first link pivots 17 is located outside the circumferential wall 3 of the hull, but the dimensions may be different in an alternative embodiment.

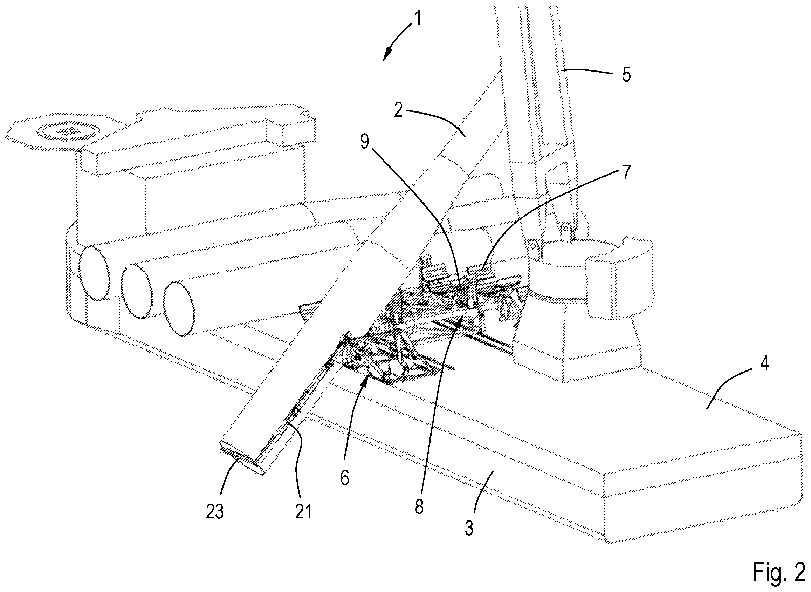

Fig. 5 shows the upending hinge 6 in a monopile upending condition in which the bearing member 19 is in a monopile upending position. This means that the bearing member 19 is rotated anti-clockwise by 90° with respect to the monopile receiving position about the common axis of rotation of the first link pivots 17. In the monopile upending position of the bearing member 19 the bearing surface 22 is located outside the circumferential wall 3 and facing away from the circumferential wall 3 at the location of the upending hinge 6. The rotation of the bearing member 19 is generated by the crane 5 which lifts the monopile 2 at an axial end thereof which is located at a distance from the support bar 23 of the support bracket 21, see Figs. 2 and 3. During the rotation from the monopile receiving position to the monopile upending position the pins of the respective first and second couplings 25, 28 are retracted.

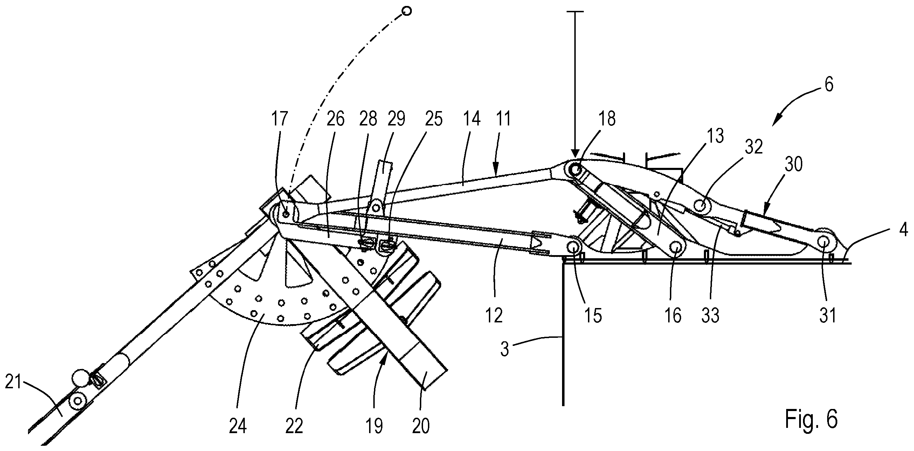

Fig. 6 shows the upending hinge 6 in a folded condition. In this condition the hydraulic cylinders which cooperate with the respective extendable rods 13 are retracted with respect to the monopile receiving condition, i.e. an unfolded condition of the upending hinge 6, as shown in Fig. 4, whereas the hydraulic cylinders 33 which cooperate with the respective articulated arms 30 remain in their extended positions. This means that the articulated arms 30 force the extendable rod 13 to rotate about the common axis of rotation of the third bar pivots 16, hence moving the upper links 14 in a direction away from the circumferential wall 3 of the hull. Consequently, the supports 12 rotate about the common axis of rotation of the support pivots 15 in the same rotational direction as the extendable rod 13. In this case the pins of the first couplings 25 are inserted in the through-holes of the corresponding annular sections 24 which through-holes are aligned to the pins of the first couplings 25 in the monopile receiving condition of the upending hinge 6, as shown in Fig. 4. This means that the relative positions of the bearing member 19 and the supports 12 remain the same during change from the monopile receiving condition, as shown in Fig. 4, to the folded condition, as shown in Fig. 6.

Fig. 6 indicates by means of a broken line a path which is followed by the first upper link pivot 17 during movement to the folded condition. Fig. 6 also illustrates by a downwardly directed arrow that the maximum height level of the upending hinge 6 above the deck 4 in the folded condition is reduced significantly with respect to the unfolded condition as shown in Fig. 4. This facilitates positioning of a monopile 2 at the upending line, since the required lifting height of the lifting carriage 8 can be minimized. It is noted that using the lifting carriage 8 instead of the crane 5 for moving a monopile 2 from a monopile storage to the upending line has several advantages such as in terms of safety.

In practice, before the lifting carriage 8 including a monopile 2 arrives at the upending line the upending hinge 6 is set in its folded condition, as shown in Fig. 6. Subsequently, the monopile 2 is moved to the upending line by the lifting carriage 8 at a slightly elevated level above the upper deck 4 until the monopile extends above the bearing surface 22 and the fixed monopile cradle 7 located at starboard of the vessel 1. Then, the upending hinge 6 is returned from the folded condition as shown in Fig. 6 to the monopile receiving condition as shown in Fig. 4, after which the lifting carriage 8 lowers the monopile 2 until it rests on the bearing surface 22 and the fixed monopile cradle 7 located at starboard of the vessel 1. The extendable rods 13 including the cooperating hydraulic cylinders, the upper links 14 and the articulated arms 30 form part of the first driving device for rotating the supports 12 about the common axis of rotation of the support pivots 15.

Fig. 6 shows that in the folded condition a large part of the upending hinge 6 is lowered to a level below the upper deck 4 outside the circumferential wall 3 of the hull. The supports 12, the upper links 14, the extendable rods 13 including the cooperating hydraulic cylinders and the articulated arms 30 as well as the support pivots 15, the first and second upper link pivots 17, 18 and the arm pivots 31 form part of a lifting mechanism for lowering the bearing member pivots with respect to their positions in the monopile receiving position of the bearing member 19.

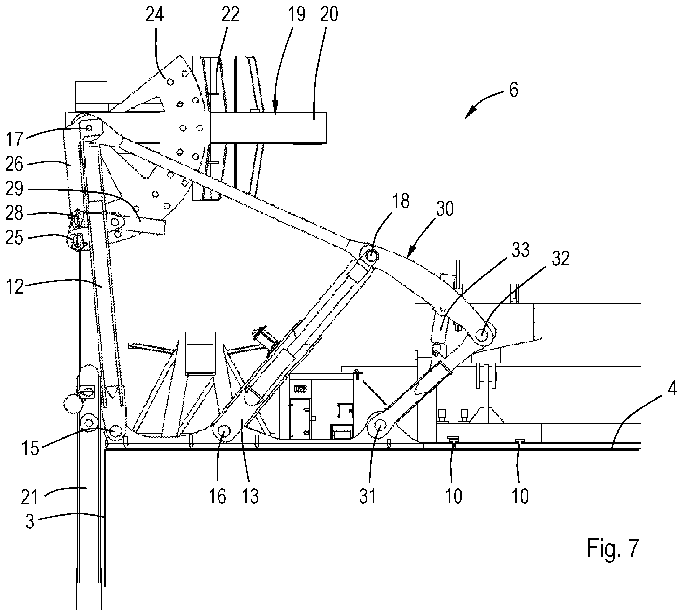

Fig. 7 shows a retracted condition of the upending hinge 6 which can be set after a monopile 2 has been upended, i.e. after the upending hinge 6 has reached the monopile upending condition as shown in Fig. 5. As described hereinbefore, in the latter situation the crane 5 has to transport the monopile 2 from the upending hinge 6 to the gripper. In order to achieve the folded condition as shown in Fig. 7 from the monopile upending condition as shown in Fig. 5 the hydraulic cylinders at the respective extendable rods 13 remain in their extended positions. The hydraulic cylinders 33 at the articulated arms 30 are retracted such that the articulated arms 30 are folded outwardly. Consequently, the extendable rods 13 and the supports 12 are forced to rotate clockwise about the common axes of rotation of the third bar pivots 16 and the support pivots 15, respectively. This means that the bearing member 19 including the supporting bracket 21 is moved in a direction which is directed from outside the circumferential wall 3 towards the circumferential wall 3 of the hull at the location of the upending hinge 6. Additionally, the hydraulic cylinders 29 which cooperate with the supports 12 and the adjusting rods 26 can be operated such that the pins of the second couplings 28 can be inserted into cooperating holes of the respective annular plate sections 24, after which the hydraulic cylinders 29 are operated such that the adjusting rods 26 are close to or contact the corresponding supports 12 and the supporting bracket 21 is close to or contacts the circumferential wall 3, as shown in Fig. 7. The pins of the first releasable couplings 25 may be retracted in this case.

Fig. 7 shows that the shape and dimensions of the frame 11 are selected such that in the retracted condition of the upending hinge 6 the supporting bracket 21 suspends along the circumferential wall 3 of the hull, whereas a largest part of the U-shaped body 20 of the bearing member 19 is positioned above the upper deck 4. As a consequence, an upended monopile 2 suspending from the crane 5 is free from the upending hinge 6 which enables the crane 5 to transport the monopile 2 towards the gripper without collisions with the upending hinge 6.

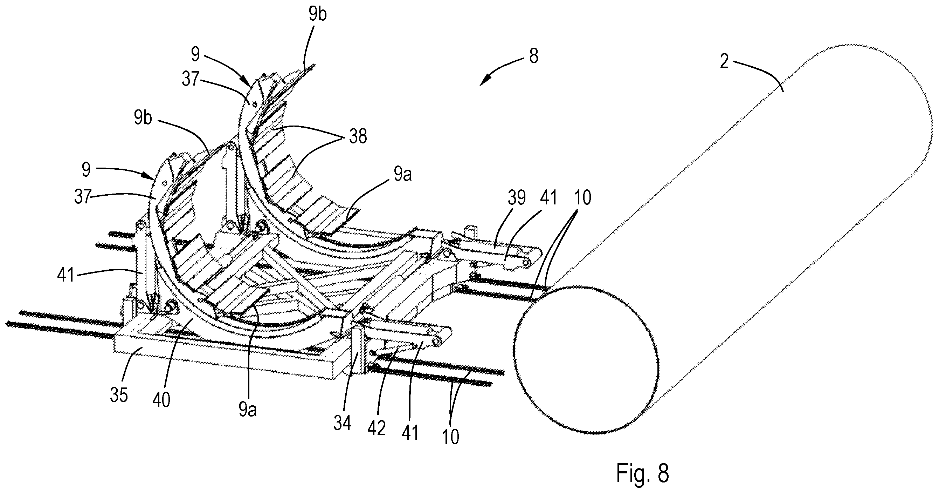

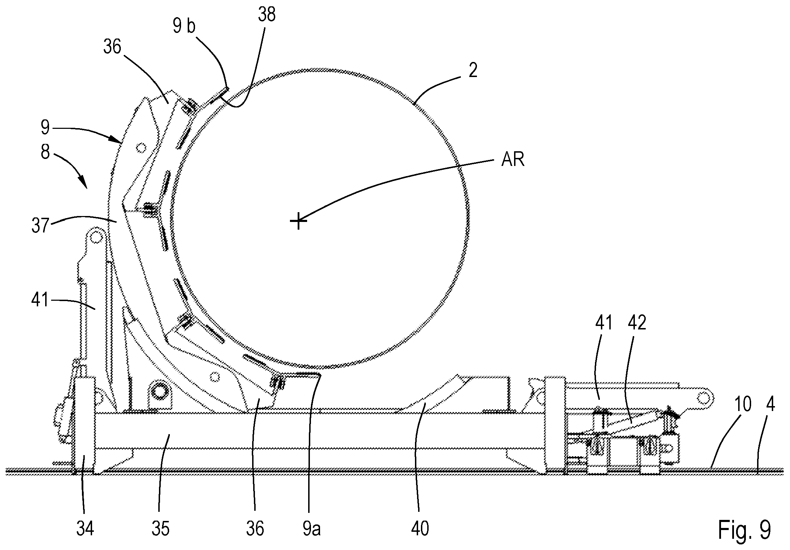

Fig. 8 shows an embodiment of a lifting carriage 8 according to the invention. The lifting carriage is also visible in Figs. 1-3 and serves to lift and transport a monopile 2 from a location of the upper deck 4 where the monopiles 2 are stored to the upending line at the upending hinge 6. The lifting carriage 8 is provided with a rectangular chassis 34 which is driveable along the rails 10. The chassis 34 supports a rectangular carrier 35 which is liftable with respect to the chassis 34. The monopile cradles 9 are mounted on the carrier 35 at a distance from each other. Each of the monopile cradles 9 has an arc-shaped cradle frame 37 which is rotatable with respect to the carrier 35 about an axis of rotation AR which extends transversely to the rails 10, see Figs. 9-11. On a concave side of the cradle frame 37 discrete support elements 38 are mounted next to each other in angular direction about the axis of rotation AR. The support elements 38 of each monopile cradle 9 provide a partly circular cylindrical supporting surface for supporting a monopile 2. The supporting surface lies on an imaginary cylinder having a substantially circular cross-section and a longitudinal centreline which substantially coincides with the axis of rotation AR. In the embodiment as shown in Figs. 8-12 the cradle frames 37 are supported by respective arc-shaped cradle frame bearings 40 on which the cradle frames 37 can slidably move in rotational direction about the axis of rotation AR. The cradle frame bearings 40 are fixed to the carrier 35.

Figs. 8-12 show that pairs of two support elements 38 are mounted to respective rockers 36 which in turn are mounted to the cradle frame 37 and rotatable with respect to the cradle frame 37 about an axis which is parallel to the axis of rotation AR. This configuration forces the support elements 38 to automatically take positions and orientations which appropriately fit to the circumference of the monopile 2 when the carrier 35 is lifted and the support elements 38 engage the monopile 2. This is advantageous in case that a section of the monopile 2 which is supported by the support elements 38 is not exactly a cylinder including a circular outer circumference.

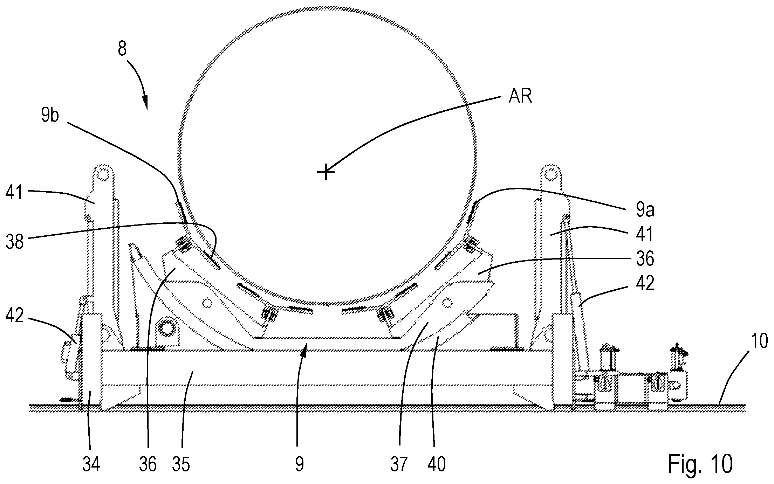

Figs. 9-11 illustrate that each of the monopile cradles 9 extends between a first edge 9a and a second edge 9b thereof. In this case the support elements 38 form the extremities of each monopile cradle 9 including the first edge 9a and the second edge 9b, but in an alternative embodiment the cradle frame 37 may have the first edge 9a and the second edge 9b. Each of the monopile cradles 9 is rotatable with respect to the carrier 35 between a monopile supporting position, as shown in Figs. 10-12 and a monopile approaching position as shown in Figs. 8 and 9. In this embodiment the first edge 9a and the second edge 9b lie at substantially the same height level in case of the monopile supporting position. In the monopile approaching position the first edge 9a lies at a lower height level than in the monopile supporting position. Similarly, in the monopile approaching position the second edge 9b lies at a higher height level than in the monopile supporting position.

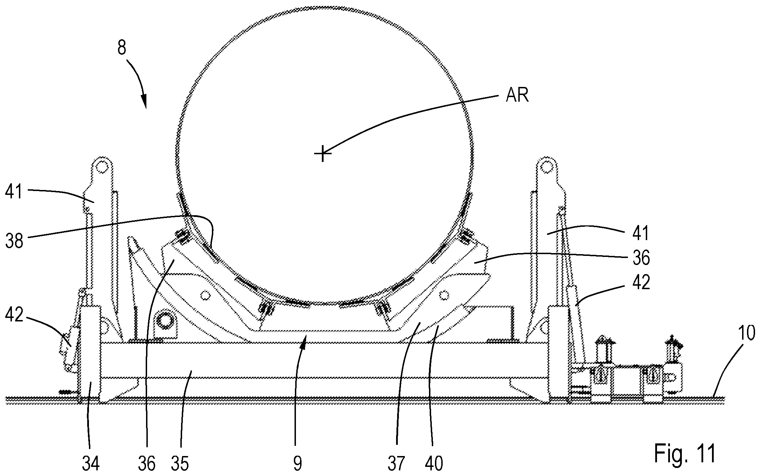

When a monopile 2 needs to be transferred from its stored location to the upending line the lifting carriage 8 can be driven towards the stored monopile 2 in its monopile approaching position as shown in Fig. 8. Just before contacting the monopile 2, as shown in Fig. 9, the monopile cradles 9 can be rotated such that they move in circumferential direction about the monopile 2 until they reach the monopile supporting position, which is illustrated in Fig. 10. Subsequently, the carrier 35 can be lifted such that the monopile 2 is engaged by the support elements 38, see Fig. 11, and then lifted from the fixed monopile cradles 7 on the deck 4 and transported to the upending line. The relatively low first edges 9a in the monopile approaching position allows the lifting carriage 8 to catch a monopile 2 which is stored on the fixed monopile cradles 7 on the upper deck 4 at a relatively low height level. A low storage level advantageously creates a stable vessel 1.

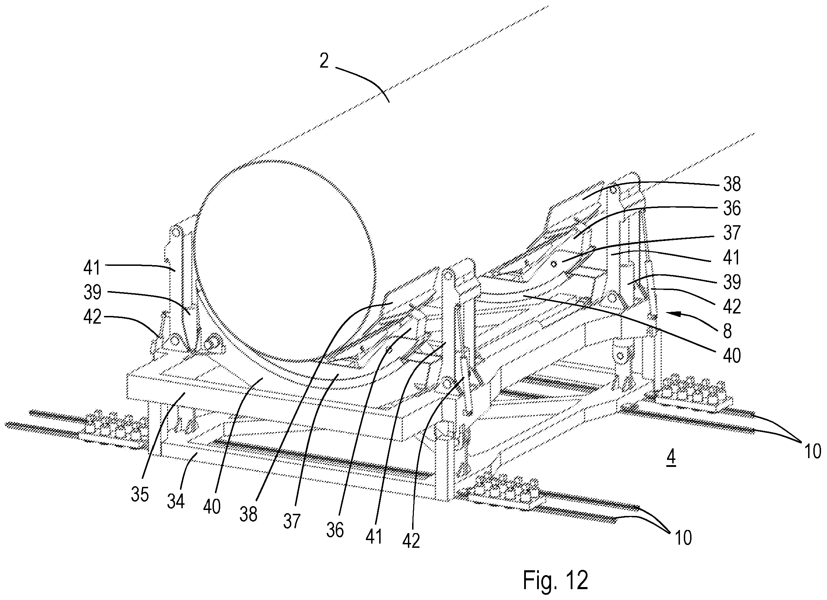

Fig. 12 illustrates a situation in which the carrier 35 is lifted with respect to the chassis 34. This is performed by means of four hydraulic cylinders 39 at respective corners of the chassis 34 and the carrier 35. The hydraulic cylinders 39 cooperate with two pairs of rods 41 at opposite sides of the carrier 35. Each pair of rods 41 is rotatable with respect to the carrier 35 about a common axis of rotation which is transverse to the rails 10. The corresponding hydraulic cylinders 39 of each pair of rods 41 are rotatably mounted to the rods 41 at a distance from the common axis of rotation and to the chassis 34. This provides sufficient space for accommodating relatively large hydraulic cylinders 39.

When the carrier 35 is in a lower position, i.e. when the hydraulic cylinders 39 are retracted, the common axis of rotation of each pair of rods 41 coincides with a common axis of rotation about which the corresponding hydraulic cylinders 39 are rotatably mounted to the chassis 34. This allows the cylinders 39 including the pair of rods 41 to rotate together between a vertical orientation and a horizontal orientation in the monopile approaching position. The latter situation is illustrated in Figs. 8 and 9 and the former situation is illustrated in Figs. 10-12. Hydraulic cylinders 42 are mounted to the rods 41 and the carrier 35 in order to rotate the cylinders 39 including the rods 41 between the vertical and horizontal orientations. This means that at the side of the monopile cradles 9 where their first edges 9a are located the hydraulic cylinders 39 do not obstruct the monopile cradles 9 from approaching a monopile 2 in its monopile approaching position, see Fig. 8, for example, since the hydraulic cylinders 39 are rotated away from their vertical orientations to horizontal orientations. It is clear that in this embodiment the rods 41 and the cooperating cylinders 39 provide the opportunity to catch monopiles 2 which are stored at a relatively low level. Nevertheless, alternative systems for rotating and lifting the monopile cradles 9 are conceivable.

## Claims

1. A vessel (1) comprising a hull including a circumferential wall (3), a deck (4) and an upending hinge (6) which is provided with a frame (11) that is mounted to at least one of the deck (4) and the hull at a position along the circumferential wall and a bearing member (19) including a bottom, two legs located at a distance from each other and extending from the bottom and a bearing surface (22) between the legs for bearing a monopile (2), which bearing member (19) is mounted to the frame (11) through bearing member pivots (17) at the respective legs having a common axis of rotation at a distance from the bottom of the bearing member (19) and extending in a direction along the circumferential wall (3) at the location of the upending hinge (6), wherein the bearing member (19) has a monopile receiving position, which is a rotational position with respect to the common axis of rotation of the bearing member pivots (17) in which the bottom of the bearing member (19) is located below the common axis of rotation of the bearing member pivots (17) and the bearing surface (22) is facing upwardly, and a monopile upending position, which is a rotational position with respect to the common axis of rotation of the bearing member pivots (17) in which the bearing surface (22) is located outside the circumferential wall (3) and facing away from the circumferential wall (3) at the location of the upending hinge (6), wherein the frame (11) is provided with a lifting mechanism (12-18, 30, 31) for lowering the bearing member pivots (17) with respect to their positions in the monopile receiving position of the bearing member (19),
wherein the lifting mechanism comprises a bearing member support (12) which is mounted to the bearing member (19) through the bearing member pivots (17) and which is mounted to one of the deck (4) and the hull through a support pivot (15) having an axis of rotation which is parallel to the common axis of rotation of the bearing member pivots (17), wherein the bearing member support (12) is rotatable about the axis of rotation of the support pivot (15) by means of a driving device (13, 14, 16, 17, 18, 30, 31) or
wherein the lifting mechanism comprises a four-bar linkage, of which the deck (4) forms a first bar, whereas a second bar (12) is mounted to the deck (4) through a second bar pivot (15) having an axis of rotation which is parallel to the common axis of rotation of the bearing member pivots (17), a third bar (13) is mounted to the deck (4) through a third bar pivot (16) having an axis of rotation which is parallel to the axis of rotation of the second bar pivot (15) and a fourth bar is formed by an upper link (14) that is mounted to the second bar (12) through a first upper link pivot (17) having an axis of rotation which is parallel to the axis of rotation of the second bar pivot (15) and to the third bar (13) through a second upper link pivot (18) having an axis of rotation which is parallel to the axis of rotation of the third bar pivot (16), wherein the bearing member (19) is mounted to at least one of the second bar (12) and the upper link (14) through the bearing member pivots (17), wherein the second bar (12) is rotatable about the axis of rotation of the second bar pivot (15) by means of a driving device (13, 14, 16, 17, 18, 30, 31).

2. A vessel (1) according to claim 1, wherein in the monopile receiving position the common axis of rotation of the bearing member pivots (17) lies outside the circumferential wall (3).

3. A vessel (1) according to claim 1 or 2, wherein the lifting mechanism comprises a bearing member support (12) which is mounted to the bearing member (19) through the bearing member pivots (17) and which is mounted to one of the deck (4) and the hull through a support pivot (15) having an axis of rotation which is parallel to the common axis of rotation of the bearing member pivots (17), wherein the bearing member support (12) is rotatable about the axis of rotation of the support pivot (15) by means of a driving device (13, 14, 16, 17, 18, 30, 31) and wherein the bearing member support (12) is rigid such that a distance between the common axis of rotation of the bearing member pivots (17) and the axis of rotation of the support pivot (15) is fixed.

4. A vessel (1) according to claim 1 or 2, wherein the lifting mechanism comprises a four-bar linkage, of which the deck (4) forms a first bar, whereas a second bar (12) is mounted to the deck (4) through a second bar pivot (15) having an axis of rotation which is parallel to the common axis of rotation of the bearing member pivots (17), a third bar (13) is mounted to the deck (4) through a third bar pivot (16) having an axis of rotation which is parallel to the axis of rotation of the second bar pivot (15) and a fourth bar is formed by an upper link (14) that is mounted to the second bar (12) through a first upper link pivot (17) having an axis of rotation which is parallel to the axis of rotation of the second bar pivot (15) and to the third bar (13) through a second upper link pivot (18) having an axis of rotation which is parallel to the axis of rotation of the third bar pivot (16), wherein the bearing member (19) is mounted to at least one of the second bar (12) and the upper link (14) through the bearing member pivots (17), wherein the second bar (12) is rotatable about the axis of rotation of the second bar pivot (15) by means of a driving device (13, 14, 16, 17, 18, 30, 31),
wherein the first upper link pivot (17) and the bearing member pivots are adapted such that their axes of rotation coincide and/or
wherein the third bar (13) is extendable by an actuator such that the distance between the axes of rotation of the third bar pivot (16) and the second upper link pivot (18) is adjustable and wherein the lifting mechanism is provided with an arm (30) which is mounted to at least one of the upper link (14) and the third bar (13) through a first arm pivot (18), on the one hand, and to the deck (4) through a second arm pivot (31), on the other hand, which first and second arm pivots (18, 31) have axes of rotation which are parallel to each other and to the axis of rotation of the third bar pivot (16), wherein the axis of rotation of the third bar pivot (16) lies between the axes of rotation of the second bar pivot (15) and the second arm pivot (31), wherein the driving device comprises the third bar (13) including the actuator, the upper link (14), the third bar pivot (16), the first upper link pivot (17), the bearing member pivots, the first arm pivot (18), the second upper link pivot (18), the arm (30) and the second arm pivot (31).

5. A vessel (1) according to claim 4, wherein the first arm pivot (18) and the second upper link pivot are adapted such that their axes of rotation coincide.

6. A vessel (1) according to claim 4 or 5, wherein the arm (30) is an articulated arm, comprising two arm sections which are mounted to each other through an intermediate pivot (32) having an axis of rotation which is parallel to the axes of rotation of the first and second arm pivots (18, 31), wherein the driving device is a first driving device (13, 14, 16, 17, 18, 30, 31) and the frame (11) is further provided with a second driving device (33) for rotating the arm sections with respect to each other.

7. A vessel (1) according to claim 3 in combination with any one of the claims 4-6, wherein the second bar of the four-bar linkage is formed by the bearing member support (12), the second bar pivot is formed by the support pivot (15), and wherein the first upper link pivot (17) and the bearing member pivots (17) are adapted such that their axes of rotation coincide.

8. A vessel (1) according to any one of the preceding claims, wherein the vessel (1) is provided with a lifting carriage (8) for lifting a horizontally oriented monopile (2), wherein the lifting carriage (8) comprises a chassis (34) which is drivable in a direction of movement on the deck (4), an arc-shaped cradle (9) which extends between a first edge (9a) and a second edge (9b) thereof and which is mounted to the chassis (34), wherein the cradle (9) is provided with a supporting surface for supporting a horizontally oriented monopile (2), which supporting surface is configured to lie on an imaginary cylinder having a substantially circular cross-section and a longitudinal centreline extending transversely to the direction of movement in case of supporting a monopile (2), wherein the cradle (9) is liftable with respect to the chassis (34) and rotatable with respect to the chassis (34) about an axis of rotation (AR) which substantially coincides with the centreline between a monopile supporting position and a monopile approaching position, wherein the first edge (9a) lies at a lower height level in case of the monopile approaching position than in case of the monopile supporting position, and wherein the second edge (9b) lies at a higher height level in case of the monopile approaching position than in case of the monopile supporting position.

9. A vessel (1) according to claim 8, wherein the first edge (9a) and the second edge (9b) lie at substantially the same height level in case of the monopile supporting position.

10. A vessel (1) according to claim 8 or 9, wherein the angular distance between the first edge (9a) and the second edge (9b) is smaller than 180°.

11. A vessel (1) according to any one of the claims 8-10, wherein the cradle (9) comprises a cradle frame (37) to which discrete support elements (38) are mounted next to each other in angular direction about the axis of rotation (AR), together providing the supporting surface, wherein the support elements (38) are movable with respect to the cradle frame (37) such that when the support elements (38) engage a monopile (2) to be lifted they will automatically take positions and orientations which fit to the circumference of the monopile (2).

12. A vessel (1) according to claim 11, wherein at least two support elements (38) are mounted to a rocker (36) which in turn is mounted to the cradle frame (37) and rotatable with respect to the cradle frame (37) about an axis which is parallel to the axis of rotation (AR).

## Patentansprüche

1. Schiff (1) mit einem Rumpf, der eine Umfangswand (3) aufweist, einem Deck (4) und einem Aufrichtscharnier (6), das versehen ist mit einem Rahmen (11), der an zumindest einem von dem Deck (4) und dem Rumpf an einer Position entlang der Umfangswand angebracht ist, und einem Auflagerelement (19), das einen Boden, zwei im Abstand voneinander angeordnete und sich vom Boden aus erstreckende Beine und eine Auflagefläche (22) zwischen den Beinen zum Auflegen eines Monopiles (2) aufweist, wobei das Auflagerelement (19) über Auflagerelement-Gelenke (17) an den jeweiligen Beinen mit einer gemeinsamen Drehachse an dem Rahmen (11) angebracht ist, die in einem Abstand vom Boden des Auflagerelements (19) ist und die sich in einer Richtung entlang der Umfangswand (3) an der Position des Aufrichtscharniers (6) erstreckt, wobei das Auflagerelement (19) eine Monopile-Aufnahmeposition, die eine Drehposition in Bezug auf die gemeinsame Drehachse der Auflagerelement-Gelenke (17) ist, in der sich der Boden des Auflagerelements (19) unterhalb der gemeinsamen Drehachse der Auflagerelement-Gelenke (17) befindet und die Auflagefläche (22) nach oben gewandt ist, und eine Monopile-Aufrichtposition hat, die eine Drehposition in Bezug auf die gemeinsame Drehachse der Auflagerelement-Gelenke (17) ist, in der sich die Lagerfläche (22) außerhalb der Umfangswand (3) befindet und von der Umfangswand (3) weggewandt ist an der Position des Aufrichtscharniers (6), wobei der Rahmen (11) versehen ist mit einem Hebemechanismus (12-18, 30, 31) zum Absenken der Auflagerelement-Gelenke (17) in Bezug auf deren Positionen in der Monopile-Aufnahmeposition des Auflagerelements (19), wobei der Hebemechanismus eine Auflagerelementhalterung (12) aufweist, die über die Auflagerelement-Gelenke (17) am Auflagerelement (19) angebracht ist und die über ein Stützgelenk (15) mit einer Drehachse, die parallel zur gemeinsamen Drehachse der Auflagerelement-Gelenke (17) ist, an einem von dem Deck (4) und dem Rumpf angebracht ist, wobei die Auflagerelementhalterung (12) mittels einer Antriebsvorrichtung (13, 14, 16, 17, 18, 30, 31) um die Drehachse des Stützlagers (15) drehbar ist, oder
wobei der Hebemechanismus ein Viergelenkgestänge aufweist, von dem das Deck (4) eine erste Stange bildet, wobei eine zweite Stange (12) über ein zweite-Stange-Gelenk (15) mit einer Drehachse, die parallel zur gemeinsamen Drehachse der Auflagerelement-Gelenke (17) ist, am Deck (4) angebracht ist, eine dritte Stange (13) über ein dritte-Stange-Gelenk (16) mit einer Drehachse, die parallel zur Drehachse des zweite-Stange-Gelenks (15) ist, am Deck (4) angebracht ist und eine vierte Stange von einem oberen Verbindungsglied (14) gebildet ist, das über ein erstes oberes Verbindungsglied-Gelenk (17) mit einer Drehachse, die parallel zur Drehachse des zweite-Stange-Gelenks (15) ist, an der zweiten Stange (12) angebracht ist und über ein zweites oberes Verbindungsglied-Gelenk (18) mit einer Drehachse, die parallel zur Drehachse des dritte-Stange-Gelenks (16) ist, an der dritten Stange (13) angebracht ist, wobei das Auflagerelement (19) über die Auflagerelement-Gelenke (17) an zumindest einem von der zweiten Stange (12) und dem oberen Verbindungsglied (14) angebracht ist, wobei die zweite Stange (12) mittels einer Antriebsvorrichtung (13, 14, 16, 17, 18, 30, 31) um die Drehachse des zweite-Stange-Gelenks (15) drehbar ist.

2. Schiff (1) gemäß Anspruch 1, wobei in der Monopile-Aufnahmeposition die gemeinsame Drehachse der Auflagerelement-Gelenke (17) außerhalb der Umfangswand (3) liegt.

3. Schiff (1) gemäß Anspruch 1 oder 2, wobei der Hebemechanismus eine Auflagerelementhalterung (12) aufweist, die über die Auflagerelement-Gelenke (17) am Auflagerelement (19) angebracht ist und die über ein Stützgelenk (15) mit einer Drehachse, die parallel zu der gemeinsamen Drehachse der Auflagerelement-Gelenke (17) ist, an einem von dem Deck (4) und dem Rumpf angebracht ist, wobei die Auflagerelementhalterung (12) mittels einer Antriebsvorrichtung (13, 14, 16, 17, 18, 30, 31) um die Drehachse des Stützgelenks (15) drehbar ist und wobei die Auflagerelementhalterung (12) starr ist, so dass ein Abstand zwischen der gemeinsamen Drehachse der Auflagerelement-Gelenke (17) und der Drehachse des Stützgelenks (15) fest ist.

4. Schiff (1) gemäß Anspruch 1 oder 2, wobei der Hebemechanismus ein Viergelenkgestänge aufweist, von dem das Deck (4) eine erste Stange bildet, wobei eine zweite Stange (12) über ein zweite-Stange-Gelenk (15) mit einer Drehachse, die parallel zur gemeinsamen Drehachse der Auflagerelement-Gelenke (17) ist, am Deck (4) angebracht ist, eine dritte Stange (13) über ein dritte-Stenge-Gelenk (16) mit einer Drehachse, die parallel zur Drehachse des zweite-Stange-Gelenks (15) ist, am Deck (4) angebracht ist und eine vierte Stange von einem oberen Verbindungsglied (14) gebildet ist, das über ein erstes oberes Verbindungsglied-Gelenk (17) mit einer Drehachse, die parallel zur Drehachse des zweite-Stange-Gelenks (15) ist, an der zweiten Stange (12) angebracht ist und über ein zweites oberes Verbindungsglied-Gelenk (18) mit einer Drehachse, die parallel zur Drehachse des dritte-Stange-Gelenks (16) ist, an der dritten Stange (13) angebracht ist, wobei das Auflagerelement (19) über die Auflagerelement-Gelenke (17) an zumindest einer von der zweiten Stange (12) und dem oberen Verbindungsglied (14) angebracht ist, wobei die zweite Stange (12) mittels einer Antriebsvorrichtung (13, 14, 16, 17, 18, 30, 31) um die Drehachse des zweite-Stange-Gelenks (15) drehbar ist,
wobei das erste obere Verbindungsglied-Gelenk (17) und die Auflagerelement-Gelenke so angepasst sind, dass ihre Drehachsen zusammenfallen, und/oder
wobei die dritte Stange (13) durch einen Aktuator ausfahrbar ist, sodass der Abstand zwischen den Drehachsen des dritte-Stange-Gelenks (16) und des zweiten oberen Verbindungsglied-Gelenks (18) einstellbar ist, und wobei der Hebemechanismus mit einem Arm (30) versehen ist, der einerseits über ein erstes Armgelenk (18) an zumindest einem von dem oberen Verbindungsglied (14) und der dritten Stange (13) und andererseits über ein zweites Armgelenk (31) an dem Deck (4) angebracht ist, wobei das erste und das zweite Armgelenk (18, 31) Drehachsen haben, die parallel zueinander und zur Drehachse des dritte-Stange-Gelenks (16) sind, wobei die Drehachse des dritte-Stange-Gelenks (16) zwischen den Drehachsen des zweite-Stange-Gelenks (15) und des zweiten Armgelenks (31) liegt, wobei die Antriebsvorrichtung die dritte Stange (13), inkludierend den Aktuator, das obere Verbindungsglied (14), das dritte-Stange-Gelenk (16), das erste obere Verbindungsglied-Gelenk (17), die Auflagerelement-Gelenke, das erste Armgelenk (18), das zweite obere Verbindungsglied-Gelenk (18), den Arm (30) und das zweite Armgelenk (31) aufweist.

5. Schiff (1) gemäß Anspruch 4, wobei das erste Armgelenk (18) und das zweite obere Verbindungsglied-Gelenk so angepasst sind, dass ihre Drehachsen zusammenfallen.

6. Schiff (1) gemäß Anspruch 4 oder 5, wobei der Arm (30) ein Gelenkarm ist, der zwei Armabschnitte aufweist, die über ein Zwischengelenk (32) miteinander verbunden sind, das eine Drehachse hat, die parallel zu den Drehachsen des ersten und des zweiten Armgelenks (18, 31) ist, wobei die Antriebsvorrichtung eine erste Antriebsvorrichtung (13, 14, 16, 17, 18, 30, 31) ist und der Rahmen (11) ferner mit einer zweiten Antriebsvorrichtung (33) zum Drehen der Armabschnitte relativ zueinander versehen ist.

7. Schiff (1) gemäß Anspruch 3 in Kombination mit irgendeinem der Ansprüche 4-6, wobei die zweite Stange des Viergelenkgestänges von der Auflagerelementhalterung (12) gebildet ist, wobei das zweite-Stange-Gelenk von dem Stützgelenk (15) gebildet ist und wobei das erste obere Verbindungsglied-Gelenk (17) und die Auflagerelement-Gelenke (17) so angepasst sind, dass ihre Drehachsen zusammenfallen.

8. Schiff (1) gemäß irgendeinem der vorstehenden Ansprüche, wobei das Schiff (1) mit einem Hebewagen (8) zum Anheben eines horizontal ausgerichteten Monopiles (2) versehen ist, wobei der Hebewagen (8) aufweist ein Fahrgestell (34), das in einer Bewegungsrichtung auf dem Deck (4) antreibbar ist, eine bogenförmige Halterung (9), die sich zwischen einem ersten Rand (9a) und einem zweiten Rand (9b) derselben erstreckt und die an dem Fahrgestell (34) angebracht ist, wobei die Halterung (9) mit einer Haltefläche zum Halten eines horizontal ausgerichteten Monopiles (2) versehen ist, wobei die Haltefläche so eingerichtet ist, dass sie auf einem imaginären Zylinder liegt, der einen im Wesentlichen kreisförmigen Querschnitt und ein Längs-Mittellinie hat, die sich im Fall des Haltens eines Monopiles (2) quer zur Bewegungsrichtung erstreckt, wobei die Halterung (9) in Bezug auf das Fahrgestell (34) anhebbar und in Bezug auf das Fahrgestell (34) um eine Drehachse (AR), die im Wesentlichen mit der Mittellinie zusammenfällt, drehbar ist zwischen einer Monopile-Halteposition und einer Monopile-Annäherungsposition, wobei der erste Rand (9a) im Fall der Monopile-Annäherungsposition auf einem niedrigeren Höhenlevel liegt als im Fall der Monopile-Halteposition, und wobei der zweite Rand (9b) im Fall der Monopile-Annäherungsposition auf einem höheren Höhenlevel liegt als im Fall der Monopile-Halteposition.

9. Schiff (1) gemäß Anspruch 8, wobei der erste Rand (9a) und der zweite Rand (9b) im Fall der Monopile-Halteposition im Wesentlichen auf demselben Höhenlevel liegen.

10. Schiff (1) gemäß Anspruch 8 oder 9, wobei der Winkelabstand zwischen dem ersten Rand (9a) und dem zweiten Rand (9b) kleiner als 180° ist.

11. Schiff (1) gemäß irgendeinem der Ansprüche 8-10, wobei die Halterung (9) einen Halterungsrahmen (37) aufweist, an dem diskrete Halteelemente (38) nebeneinander in Winkelrichtung um die Drehachse (AR) angeordnet sind, die zusammen die Haltefläche bilden, wobei die Halteelemente (38) mit Bezug auf den Halterungsrahmen (37) bewegbar sind, so dass, wenn die Halteelemente (38) mit einem anzuhebenden Monopile (2) in Eingriff kommen, sie automatisch Positionen und Ausrichtungen einnehmen, die zum Umfang des Monopiles (2) passen.

12. Schiff (1) gemäß Anspruch 11, wobei zumindest zwei Halteelemente (38) an einer Wippe (36) angebracht sind, die ihrerseits am Halterungsrahmen (37) angebracht und in Bezug auf den Halterungsrahmen (37) um eine Achse drehbar ist, die parallel zur Drehachse (AR) ist.

## Revendications

1. Navire (1) comprenant une coque comportant une paroi circonférentielle (3), un pont (4) et une charnière de renversement (6) qui est dotée d'un cadre (11) qui est monté sur au moins un parmi le pont (4) et la coque à une position le long de la paroi circonférentielle et un organe d'appui (19) comportant un fond, deux pieds situés à une distance l'un de l'autre et s'étendant à partir du fond et une surface d'appui (22) entre les pieds pour porter un monopieu (2), lequel organe d'appui (19) est monté sur le cadre (11) par le biais de pivots d'organe d'appui (17) au niveau des pieds respectifs ayant un axe de rotation commun à une distance du fond de l'organe d'appui (19) et s'étendant dans une direction le long de la paroi circonférentielle (3) à l'emplacement de la charnière de renversement (6), dans lequel l'organe d'appui (19) présente une position de réception de monopieu, qui est une position de rotation par rapport à l'axe de rotation commun des pivots d'organe d'appui (17), dans laquelle le fond de l'organe d'appui (19) est situé sous l'axe de rotation commun des pivots d'organe d'appui (17) et la surface d'appui (22) est orientée vers le haut, et une position de renversement de monopieu, qui est une position de rotation par rapport à l'axe de rotation commun des pivots d'organe d'appui (17) dans laquelle la surface d'appui (22) est située à l'extérieur de la paroi circonférentielle (3) et orientée à l'opposé de la paroi circonférentielle (3) à l'emplacement de la charnière de renversement (6), dans lequel le cadre (11) est doté d'un mécanisme de levage (12-18, 30, 31) pour abaisser les pivots d'organe d'appui (17) par rapport à leurs positions dans la position de réception de monopieu de l'organe d'appui (19), dans lequel le mécanisme de levage comprend un support d'organe d'appui (12) qui est monté sur l'organe d'appui (19) par le biais des pivots d'organe d'appui (17) et qui est monté sur l'un du pont (4) et de la coque par le biais d'un pivot de support (15) ayant un axis de rotation qui est parallèle à l'axe de rotation commun des pivots d'organe d'appui (17), dans lequel le support d'organe d'appui (12) peut tourner autour de l'axe de rotation du pivot de support (15) au moyen d'un dispositif d'entraînement (13, 14, 16, 17, 18, 30, 31) ou
dans lequel le mécanisme de levage comporte un quadrilatère articulé, dont le pont (4) forme une première barre, tandis qu'une deuxième barre (12) est montée sur le pont (4) par le biais d'un pivot de deuxième barre (15) ayant un axe de rotation qui est parallèle à l'axe de rotation commun des pivots d'organe d'appui (17), une troisième barre (13) est montée sur le pont (4) par le biais d'un pivot de troisième barre (16) ayant un axe de rotation qui est parallèle à l'axe de rotation du pivot de deuxième barre (15) et une quatrième barre est formée par une bielle supérieure (14) qui est montée sur la deuxième barre (12) par le biais d'un premier pivot de bielle supérieure (17) ayant un axe de rotation qui est parallèle à l'axe de rotation du pivot de deuxième barre (15) et à la troisième barre (13) par le biais d'un deuxième pivot de bielle supérieure (18) ayant un axe de rotation qui est parallèle à l'axe de rotation de pivot de troisième barre (16), dans lequel l'organe d'appui (19) est monté sur au moins une parmi la deuxième barre (12) et la bielle supérieure (14) par le biais des pivots d'organe d'appui (17), dans lequel la deuxième barre (12) peut tourner autour de l'axe de rotation du pivot de deuxième barre (15) au moyen d'un dispositif d'entraînement (13, 14, 16, 17, 18, 30, 31).

2. Navire (1) selon la revendication 1, dans lequel, dans la position de réception de monopieu, l'axe de rotation commun des pivots d'organe d'appui (17) se trouve à l'extérieur de la paroi circonférentielle (3).

3. Navire (1) selon la revendication 1 ou 2, dans lequel le mécanisme de levage comprend un support d'organe d'appui (12) qui est monté sur l'organe d'appui (19) par le biais des pivots d'organe d'appui (17) et qui est monté sur l'un du pont (4) et de la coque par le biais d'un pivot de support (15) ayant un axe de rotation qui est parallèle à l'axe de rotation commun des pivots d'organe d'appui (17), dans lequel le support d'organe d'appui (12) peut tourner autour de l'axe de rotation du pivot de support (15) au moyen d'un dispositif d'entraînement (13, 14, 16, 17, 18, 30, 31) et dans lequel le support d'organe d'appui (12) est rigide de sorte qu'une distance entre l'axe de rotation commun des pivots d'organe d'appui (17) et l'axe de rotation du pivot de support (15) est fixe.

4. Navire (1) selon la revendication 1 ou 2, dans lequel le mécanisme de levage comporte un quadrilatère articulé, dont le pont (4) forme une première barre, tandis qu'une deuxième barre (12) est montée sur le pont (4) par le biais d'un pivot de deuxième barre (15) ayant un axe de rotation qui est parallèle à l'axe de rotation commun des pivots d'organe d'appui (17), une troisième barre (13) est montée sur le pont (4) par le biais d'un pivot de troisième barre (16) ayant un axe de rotation qui est parallèle à l'axe de rotation du pivot de deuxième barre (15) et une quatrième barre est formée par une bielle supérieure (14) qui est montée sur la deuxième barre (12) par le biais d'un premier pivot de bielle supérieure (17) ayant un axe de rotation qui est parallèle à l'axe de rotation du pivot de deuxième barre (15) et sur la troisième barre (13) par le biais d'un deuxième pivot de bielle supérieure (18) ayant un axe de rotation qui est parallèle à l'axe de rotation du pivot de troisième barre (16), dans lequel l'organe d'appui (19) est monté sur au moins une parmi la deuxième barre (12) et la bielle supérieure (14) par le biais des pivots d'organe d'appui (17), dans lequel la deuxième barre (12) peut tourner autour de l'axe de rotation du pivot de deuxième barre (15) au moyen d'un dispositif d'entraînement (13, 14, 16, 17, 18, 30, 31),
dans lequel le premier pivot de bielle supérieure (17) et les pivots d'organe d'appui sont adaptés de sorte que leurs axes de rotation coïncident et/ou
dans lequel la troisième barre (13) est extensible par un actionneur de sorte que la distance entre les axes de rotation du pivot de troisième barre (16) et du deuxième pivot de bielle supérieure (18) puisse être réglée, et dans lequel le mécanisme de levage est doté d'un bras (30) qui est monté sur au moins une parmi la bielle supérieure (14) et la troisième barre (13) par le biais d'un premier pivot de bras (18), d'une part, et sur le pont (4) par le biais d'un deuxième pivot de bras (31), d'autre part, lesquels premier et deuxième pivots de bras (18, 31) ont des axes de rotation qui sont parallèles entre eux et à l'axe de rotation du pivot de troisième barre (16), l'axe de rotation du pivot de troisième barre (16) se trouve entre les axes de rotation du pivot de deuxième barre (15) et du deuxième pivot de bras (31), dans lequel le dispositif d'entraînement comprend la troisième barre (13) comportant l'actionneur, la bielle supérieure (14), le troisième pivot de barre (16), le premier pivot de bielle supérieure (17), les pivots d'organe d'appui, le premier pivot de bras (18), le deuxième pivot de bielle supérieure (18), le bras (30) et le deuxième pivot de bras (31).

5. Navire (1) selon la revendication 4, dans lequel le premier pivot de bras (18) et le deuxième pivot de bielle supérieure sont adaptés de sorte que leurs axes de rotation coïncident.

6. Navire (1) selon la revendication 4 ou 5, dans lequel le bras (30) est un bras articulé, comprenant deux sections de bras qui sont montées l'une sur l'autre par le biais d'un pivot intermédiaire (32) ayant un axe de rotation qui est parallèle aux axes de rotation des premier et deuxième pivots de bras (18, 31), dans lequel le dispositif d'entraînement est un premier dispositif d'entraînement (13, 14, 16, 17, 18, 30, 31) et le cadre (11) est en outre doté d'un deuxième dispositif d'entraînement (33) pour faire tourner les sections de bras l'une par rapport à l'autre.

7. Navire (1) selon la revendication 3 en combinaison avec l'une quelconque des revendications 4 à 6, dans lequel la deuxième barre du quadrilatère articulé est formée par le support d'organe d'appui (12), le pivot de deuxième barre est formé par le pivot de support (15), et dans lequel le premier pivot de bielle supérieure (17) et les pivots d'organe d'appui (17) sont adaptés de sorte que leurs axes de rotation coïncident.

8. Navire (1) selon l'une quelconque des revendications précédentes, dans lequel le navire (1) est doté d'un chariot de levage (8) pour soulever un monopieu (2) orienté horizontalement, dans lequel le chariot de levage (8) comprend un châssis (34) qui peut être entraîné dans une direction de déplacement sur le pont (4), un berceau (9) en forme d'arc qui s'étend entre un premier bord (9a) et un deuxième bord (9b) de celui-ci et qui est monté sur le châssis (34), dans lequel le berceau (9) est doté d'une surface de support pour supporter un monopieu (2) orienté horizontalement, laquelle surface de support est configurée pour se trouver sur un cylindre imaginaire ayant une section sensiblement circulaire et une ligne centrale longitudinale s'étendant transversalement à la direction de déplacement en cas de support d'un monopieu (2), dans lequel le berceau (9) peut être levé par rapport au châssis (34) et tourner par rapport au châssis (34) autour d'un axe de rotation (AR) qui coïncide sensiblement avec la ligne centrale entre une position de support de monopieu et une position d'approche de monopieu, dans lequel le premier bord (9a) se trouve à un niveau de hauteur inférieur dans la position d'approche de monopieu par rapport à la position de support de monopieu, et dans lequel le deuxième bord (9b) se trouve à un niveau de hauteur supérieur dans la position d'approche de monopieu par rapport à la position de support de monopieu.

9. Navire (1) selon la revendication 8, dans lequel le premier bord (9a) et le deuxième bord (9b) se trouvent sensiblement au même niveau de hauteur dans la position de support de monopieu.

10. Navire (1) selon la revendication 8 ou 9, dans lequel la distance angulaire entre le premier bord (9a) et le deuxième bord (9b) est inférieure à 180°.

11. Navire (1) selon l'une quelconque des revendications 8 à 10, dans lequel le berceau (9) comprend un cadre de berceau (37) sur lequel des éléments de support (38) discrets sont montés l'un à côté de l'autre dans une direction angulaire autour de l'axe de rotation (AR), fournissant ensemble la surface de support, dans lequel les éléments de support (38) sont mobiles par rapport au cadre de berceau (37) de sorte que lorsque les éléments de support (38) viennent en prise avec un monopieu (2) pour être soulevés, ils prennent automatiquement des positions et des orientations qui correspondent à la circonférence du monopieu (2).

12. Navire (1) selon la revendication 11, dans lequel au moins deux éléments de support (38) sont montés sur un culbuteur (36) qui est à son tour monté sur le cadre de berceau (37) et peut tourner par rapport au cadre de berceau (37) autour d'un axe qui est parallèle à l'axe de rotation (AR) .
